# EUROPEAN PATENT SPECIFICATION

(11) **EP 1 259 844 B1**
(45) Date of publication and mention of the grant of the patent: **02.11.2005**
(21) Application number: 00991857.4
(22) Date of filing: 14.11.2000
(51) Int. Cl.: G02B 6/42

(54) **Production line for mounting and alignment of an optical component**
Produktionslinie zur Montage und Ausrichtung eines optischen Elementes
Chaîne de production pour l'assemblage et l'alignement d'un composant optique

(30) Priority: 15.11.1999 US 165431 P; 03.03.2000 US 186925 P; 25.08.2000 US 645827; 25.08.2000 US 648349
(43) Date of publication of application: 27.11.2002
(73) Proprietor: Axsun Technologies, Inc., Billerica, MA 01821 (US)
(72) Inventor: FLANDERS, Dale, C., Lexington, MA 02420 (US); WHITNEY, Peter, S., Lexington, MA 02421 (US)
(74) Representative: Ganahl, Bernhard
(86) International application number: PCT/US2000/031180
(87) International publication number: WO 2001/037020

(56) References cited:
- EP-A- 0 647 091
- WO-A-91/06022
- FR-A- 2 690 996
- GB-A- 2 229 856
- GB-A- 2 296 100
- US-A- 4 528 747
- US-A- 5 351 330
- US-A- 5 870 518
- KRAVITZ S H ET AL: "A PASSIVE MICROMACHINED DEVICE FOR ALIGNMENT OF ARRAYS OF SINGLE- MODE FIBERS FOR MANUFACTURABLE PHOTONIC PACKAGING" PROCEEDINGS OF THE LASERS AND ELECTRO-OPTICS SOCIETY ANNUAL MEETING. (LEOS),US,NEW YORK, IEEE, vol. MEETING 7, 31 October 1994 (1994-10-31), pages 226-227, XP000510762 ISBN: 0-7803-1471-9
- KNIGHT J D ET AL: "A TWO-AXIS MICROPOSITIONER FOR OPTICAL FIBER ALIGNMENT" HEWLETT-PACKARD JOURNAL, HEWLETT-PACKARD CO. PALO ALTO, US, vol. 44, no. 6, 1 December 1993 (1993-12-01), pages 80-84, XP000422721
- COOPER K.A. ET AL: 'FLIP CHIP EQUIPMENT FOR HIGH END ELECTRO-OPTICAL MODULES' 1998 PROCEEDINGS OF THE 48TH. ELECTRONIC COMPONENTS AND TECHNOLOGY CONFERENCE 25 May 1998, ECTC 1998. SEATTLE, pages 176 - 180, XP000803614
- QING TAN; LEE Y.C.: 'Soldering technology for optoelectronic packaging' ELECTRONIC COMPONENTS AND TECHNOLOGY CONFERENCE 28 May 1996, NEW YORK, NY, USA, pages 26 - 36, XP010167325

## Description

The invention relates to an optical system production line.

### BACKGROUND OF THE INVENTION

Component alignment is of critical importance in semiconductor and/or MEMS (micro electro-mechanical systems) based optical system manufacturing. The basic nature of light requires that light generating, transmitting, and modifying components must be positioned accurately with respect to one another, especially in the context of free-space-optical systems, in order to function properly and effectively in electro-optical or all optical systems. Scales characteristic of semiconductor and MEMS necessitate sub-micron alignment accuracy.

Considering the specific example of coupling a semiconductor diode laser, such as a pump laser, to a fiber core of a single mode fiber. Only the power that is coupled into the fiber core is usable to optically pump a subsequent gain fiber, such as a rare-earth doped fiber or regular fiber, in a Raman pumping scheme. The coupling efficiency is highly dependent on accurate alignment between the laser output facet and the core; inaccurate alignment can result in partial or complete loss of signal transmission through the optical system.

Moreover, such optical systems require mechanically robust mounting and alignment configurations. During manufacturing, the systems are exposed to wide temperature ranges and purchaser specifications can explicitly require temperature cycle testing. After delivery, the systems can be further exposed to long-term temperature cycling and mechanical shock.

Solder joining and laser welding are two common mounting techniques. Solder attachment of optical elements can be accomplished by performing alignment with a molten solder joint between the element to be aligned and the platform or substrate to which it is being attached. The solder is then solidified to "lock-in" the alignment. In some cases, an intentional offset is added to the alignment position prior to solder solidification to compensate for subsequent alignment shifts due to solidification shrinkage of the solder. In the case of laser welding, the fiber, for example, is held in a clip that is then aligned to the semiconductor laser and welded in place. The fiber may then also be further welded to the clip to yield alignment along other axes. Secondary welds are often employed to compensate for alignment shifts due to the weld itself, but as with solder systems, absolute compensation is not possible.

Further, there are two general classes of alignment strategies: active and passive. Typically in passive alignment of the optical components, registration or alignment features are fabricated directly on the components or component carriers as well as on the platform to which the components are to be mounted. The components are then mounted and bonded directly to the platform using the alignment features. In active alignment, an optical signal is transmitted through the components and detected. The alignment is performed based on the transmission characteristics to enable the highest possible performance level for the system.

US 4,528,747 discloses a method and an apparatus for simultaneously mounting one or a plurality of multilead components on circuit boards. This apparatus comprises a robotic arm for manipulating a template. The template has a plurality of openings adapted to receive the outer bodies of components which are to be mounted on the circuit board. By this method, firstly, the template is loaded with the components, wherein in each opening of the template one component is placed. The placing of the components on the board is achieved by positioning the components-loaded template in substantially parallel spaced relation to the board. The components are released out of the respective openings of the template onto the board by enlarging the corresponding openings. The positioning of the template by means of the robotic arm may be substantially aided by using a set of auxiliary locating devices, e.g., tapered pins to be inserted in mating apertures or one portion of the releasable template.

From EP 0 647 091 a method for passive alignment of components to a substrate is known. A micromachined tool is used having openings which receive and align components with respect to each other and a substrate. The tool has fiducial marks which align to fiducial marks on the substrate thereby producing precise alignment of the tool and the substrate. The components are inserted into the openings thereby insuring their alignment with respect to the substrate. The components may be either electrical or optical devices which are secured to the substrate by soldering.

In Q. Tan et al. "Soldering Technology for Optoelectronic Packaging", proceedings of the 46th Electronic Components and Technology Conference, 28-31 May 1996, Orlando, Florida, USA, page 26 - 36 the soldering technology for optoelectronic packaging is discussed.

In K.A. Cooper et al. "Flip Chip Equipment for High End Electro-Optical Modules", proceeding of the 48^{th} Electronic Components and Technology Conference, 25-28 May 1998, New York, USA, page 176-180 it is mentioned that optoelectronic modules has proven to be one of the most challenging alignment problems faced by assembly engineers today. Silicon optical platform applications, where a laser diode is aligned to a single mode fiber or an optical waveguide, then soldered to a substrate, require post-bonding alignments better than 1 µm for optimum device performance.

In WO 91/06022 an optical component mount is disclosed, comprising an approximately diamond shaped frame portion and integral therewith a straight foot section. Projecting into the interior of the frame from its corner opposite the foot section is a lug. The lug has an aperture which holds a lens. To adjust the position of the lens, the frame is deformed by applying an external force by means of a suitable tool. The deformation of the frame may occur, essentially, in one of two ways: either the frame as a whole distorts, or distortion is restricted to dedicated portions of the frame, such as the corner sections of the frame.

An alternative embodiment of an optical component mount is, essentially, an inverted T shape in which the aperture for mounting the lens is located at the far end of the stem of the T, and in which the foot section is formed by the crossbar of the T. Nearest the crossbar, the stem is weakened by two offset slots, wherein between the two slots a bridge is formed which is a zone of mechanical weakness. This bridge permits left to right movement by bending deformation. Up and down movement of the portion above the bridge causes shear deformation of the bridge. While movement to the back and the front causes a torsional deformation of the bride.

GB 2 296 100 A discloses an optical fiber pigtailed injection laser package. An end of an optical fiber is held in alignment with an injection laser by securing the fiber to a slotted rod. During a first alignment process the slotted rod is manipulated to bring the fiber into the position providing the maximum level of monitored power. Then the position of the rod is fixed by means of two slide members which are moved close to the rod and secured by welding. After this first alignment process a second alignment process is carried out which is called "re-alignment". This second alignment process is carried out by means of a deformable saddle. This saddle is secured to a substrate by laser beam welds. After the welding the saddle and rod can be suitable re-positioned by deforming the saddle arms by pushing the assembly beyond the elastic limit of those arms with a suitable tool.

GB 2 229 856 A discloses a sheet-metal micro lens holder. This lens holder is made of a nickel iron or nickel iron cobalt low expansion alloy. The lens holder is provided with two legs which are downwardly cranked to space the main body portion of the lens holder clear of a substrate. In order to facilitate manipulation of the lens holder it is provided with a lug which is readily gripped between the jaws of a micromanipulator. Such a lens holder is placed by micromanipulator in position in front of a laser chip which is already been mounted on its substrate. The position of the lens holder is adjusted until a light pattern recorded by a camera is of the required size and in the required position. Then the legs of the lens holder are se-cured to the substrate by laser beam welding. Alternatively electric welding may be used. A fine adjustment of position can be made by using the micromanipulator to plastically strain the legs after welding. If an alternative method of securing the legs to the substrate is chosen, such as for instance soldering, subsequent fine adjustment may be required in almost every instance.

### SUMMARY OF THE INVENTION

The object of the invention is to provide an optical system production line which overcomes the above described problems.
The object is solved by an optical system production line with the features of claim 1. Advantageous embodiments of the invention are given in the corresponding subclaims. The optical system production line according to the invention comprises an optical bench supply that provides optical benches and a component supply that provides optical components. A pick-and-place machine receives optical benches and picks optical components from the optical component supply, and then places the optical components on the optical benches. It then secures the optical components to the bench. Optical system aligner then characterizes the positions of the secured optical components on the optical bench and mechanically adjusts the relative positions of the optical components.

In the preferred embodiment, the pick-and-place machine secures the optical components to the bench by solder bonding. In the current implementation, the pick and place machine is a flip-chip bonder. Further, the optical system aligner characterizes the positions of the optical components by activating an optical link of the optical system, detecting an optical signal after interaction with at least some of the optical components, and adjusting the optical components to optimize transmission of the optical signal over the link. The alignment system preferably comprises two jaws for engaging a mounting structure supporting the optical component and moving the structure relative to the bench.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a perspective view of a first example of a mounting and alignment structure;
Fig. 2 is a front plan view of the first example of a mounting and alignment structure;
Fig. 3A is a perspective view showing a second example of a mounting and alignment structure;
Fig. 3B is a front plan view showing the dimensions of the second example structure;
Fig. 4 is a perspective view showing a third example of a mounting and alignment structure;
Fig. 5A is front plan view showing a fourth example of a mounting and alignment structure;
Fig. 5B is perspective view showing a related example of a mounting and alignment structures;
Fig. 6 is front plan view showing a fifth example of a mounting and alignment structure;
Fig. 7 is a front plan view of a sixth example of a mounting and alignment structure;
Fig. 8 is a front plan view of a seventh example of a mounting and alignment structure;
Figs. 9 and 10 show eighth and ninth examples of mounting and alignment structures;
Fig. 11 is a front plan view of a tenth example of a mounting and alignment structure in which separate structures are integrated onto a single base;
Fig. 12 is a plan view showing an eleventh example of a mounting and alignment structure;
Fig. 13 is a plan view showing a twelfth example;
Fig. 14 is a plan view showing a thirteenth example of a mounting and alignment structure for passive component alignment;
Figs. 15A and 15B are front plan views showing fourteen example of a mounting and alignment structure and its deployment for mounting a second optical component in proximity to another optical component, Fig. 15C is an exploded perspective view showing a MEMS filter for mounting on the fitheenth examples;
Figs. 16A, 16B, 16C are cross-sectional views of the plating and lithography processes used to fabricate mounting and alignment structures;
Figs. 17A-17F illustrate a process for manufacturing mounting and alignment structures that have non-constant cross-sections along a z-axis for portions of structures;
Fig. 18A and 18B are a perspective diagram illustrating the process steps associated with installing optical components on the mounting and alignment structures and mounting and alignment structures on the optical bench;
Fig. 19 is a perspective drawing of a laser optical signal source that couples a beam into an optical fiber held by a mounting and alignment structure;
Fig. 20 is a process diagram illustrating the optical system active alignment process;
Fig. 21 is a perspective top view showing the jaws of an aligner engaging the handle of a mounting and alignment structure to deform the structure during an alignment process;
Fig. 22 is a plot of force and optical response on the vertical axis as a function of displacement or strain on the horizontal axis illustrating an alignment process;
Fig. 23 is the plot of force along the y-axis as a function of displacement illustrating constraints in the selection of the yield force;
Fig. 24 is a perspective view showing a fifteenth, composite structure example;
Fig. 25 is a schematic perspective view of a sixteenth, dual material example;
Fig. 26 is a schematic diagram illustrating a production line for optical systems, according to the present invention; and
Figs. 27A, 27B, and 27C are partial plan views of the mounting and alignment structures showing three different configurations for the alignment channels.

### DETAILED DESCRIPTION OF THE PREFERRED EMBODIMENTS

### Mounting and alignment structure configuration

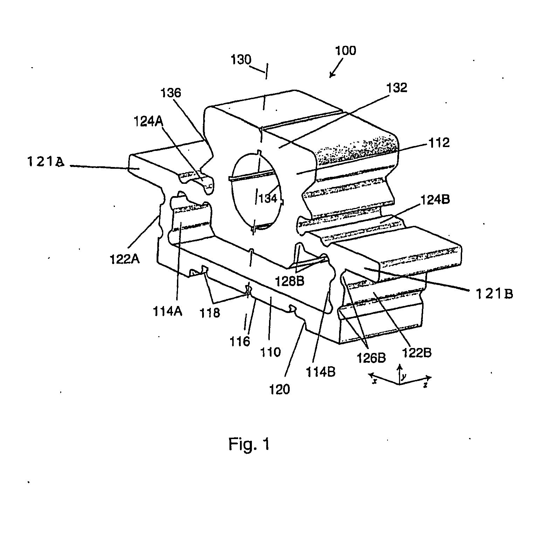

Fig. 1 shows an exemplary mounting and alignment structure.

Generally, the alignment structure 100 comprises a base 110, an optical component interface 112, and left and right armatures 114A, 114B, which either directly connect, or indirectly connect, the base 110 to the interface 112.

The base I 10 comprises a laterally-extending base surface 116. In the illustrated example, the base surface 116 extends in a plane of the x and z axes, generally.

The base/base-surface comprise alignment features. In some examples, these features are adapted to mate with opposite-gendered alignment features of an optical bench. In the specific illustrated implementation, the alignment features are used by machine vision to match to alignment marks or features of a bench. Specifically, the alignment features comprise a wide, U-shaped cut out region 120. Three female alignment channels 118 are further provided that extend along the entire depth of the structure in the direction of the z-axis. The U-shaped cut-out region 120 has the added advantage of minimizing the contact area and thus stress in the interface between the structure and the bench or other surface to which it is attached.

In the illustrated implementation, each of the armatures 114A, 114B comprises two segments 122 and 124. Specifically, and for example, armature 114B comprises two segments, 122B and 124B.

The vertically-extending segments 122A, 122B, *i.e*., extending at least partially in the y-axis direction, have two flexures 126A, 126B along their length, in the illustrated example. These flexures are regions of reduced cross-sectional area in the segments, which regions extend in the direction of the z-axis. The vertically-extending segments 122 facilitate the positioning of an optical component, installed on the interface 112, along the x-axis; the flexures 126A, 126B facilitate the pivoting of the segments 122A, 122B in a plane of the x and y axes. A purpose of the flexures is to isolate regions of microstructural change, such as occurring in plastic deformation, in order to make the yield forces, for example, readily predictable. Also, the flexures localize deformation on the armatures and consequently decrease the amount of force/movement required in the optical component before plastic deformation is initiated in the armature.

Horizontally-extending (*i*.*e*., extending in the direction of the x-axis) segment 124A, 124B each comprise, in the illustrated example two flexures 128A, 128B. These flexures are also regions of reduced cross-sectional area in the respective segments, the flexures extending in the direction of the z-axis.

The horizontally-extending segments 124A, 124B allow the positioning of an optical component, installed on the optical component interface 112, generally vertically along the y-axis. Armature deformation is facilitated by respective flexures 128A, 128B.

In one implementation, the optical component is bonded to the optical component interface 112, and specifically bonding surface 132. This bonding is accomplished either through polymeric adhesive bonding or preferably solder bonding. In other implementations, thermocompression bonding, laser welding, reactive bonding or other bonding method are used.

In the illustrated example the component interface further includes structure-component alignment features 113. In the illustrated example, the structure-component alignment features comprise slots extending in the z-axis direction from the component bonding surface 132. As a result, corresponding male-projections of an optical component are engaged the slots 113 to locate and align the optical component over the optical port 134 both along the x-axis and y-axis.

The optical component interface, in some implementations, comprises a port 134 for enabling an optical signal to pass transversely through the structure. This enables optical access to the optical component by either facilitating the propagation of an optical signal to and/or away from the component.

To facilitate the grasping and placement of the structure 100, a handle 136 is also provided on the structure. In the illustrated example, the handle 136 comprises two V- or U-shaped cut out regions on either side, near the top of the top of the structure. In the illustrated example, they are integral with the optical component interface 112.

The handle 136 enables the manipulation of the structure 100 when attached to the bench 10. Specifically, the right cut-out is engaged to displace the structure to the left, for example. To displace the structure vertically or in the y-axis direction, both cut-out are engaged enabling the structure to be pressed down toward the bench 10 or pulled away from the bench

To further facilitate grasping and installation on the bench, wing portions 121A, 121B are provided on each armature. These are used by heated vacuum chuck to enable manipulation of the structure and subsequent heating for solder bonding. The short distance between the wings 121 and the base surface 116 facilitate good heat transfer.

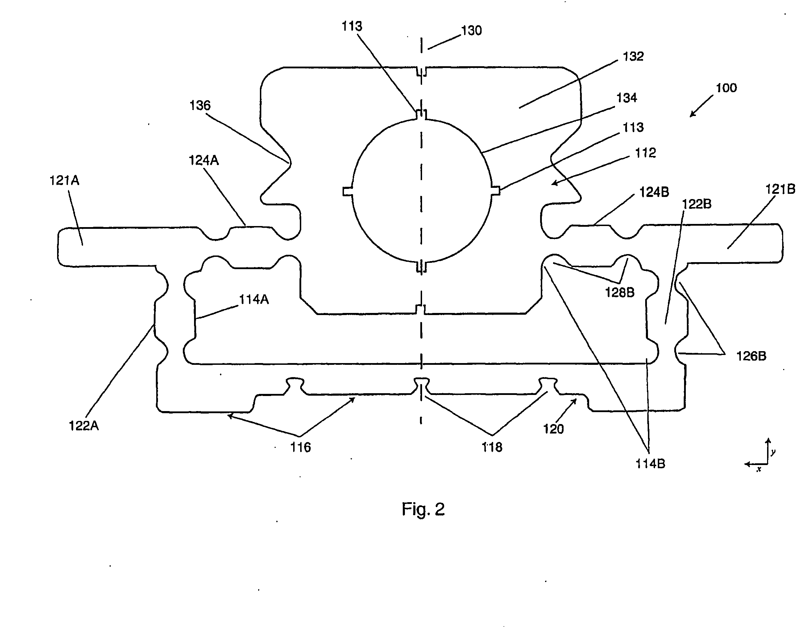

Fig. 2 is a front plan view of the first embodiment of the mounting and alignment structure 100, illustrated in Fig. 1. This view illustrates the construction of the left and right armatures 114A, 114B, and specifically how the armatures are constructed from respective horizontally-extending segments 124 and vertically extending segments 122.

Also shown is the extent of the bonding surface 132. Typically, a solder material is first applied to the surface 132. Later, the optical components and/or structures are heated and brought into contact with each other to effect the solder bonding. In other embodiments, epoxy bonding processes are used in which epoxy is first applied to the surface 132.

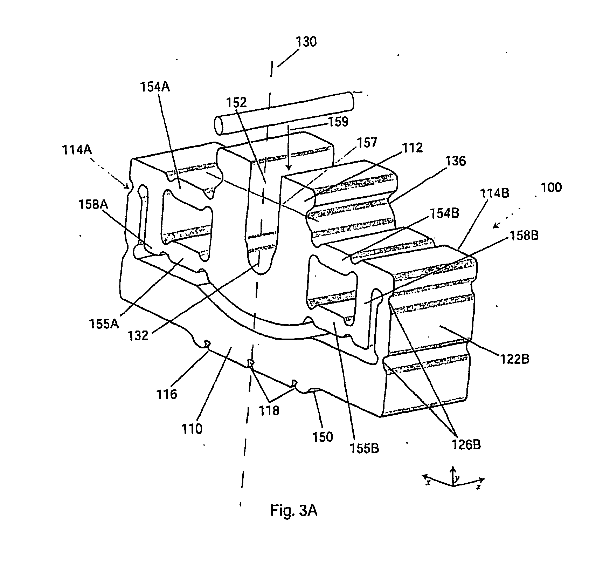

Fig. 3A shows a second example of the mounting and alignment structure. This example shares a number of similarities with the first example illustrated in Figs. 1 and 2. Specifically, the mounting surface 116 has slot-like alignment channels 118 for visual alignment.

Turning to the armatures 114A, 114B, vertically-extending portions 122A, 122B are provided similar to the first example. Two horizontally extending portions 154, 155, however, are provided on each armature on each side of the mounting and alignment structure 100. Specifically, the armature 114B comprises two horizontally extending segments 154B, 155B, which extend generally from the vertically extending portion 122B to the optical component interface 112. Specifically, a linkage portion 158B connects the distal ends both of the horizontally-extending portions 154B, 155B to the vertically-extending portion 122B of armature 114B.

The second example of Fig. 3A illustrates a further configuration for the optical component interface 112. Specifically, the optical interface 112 of the second example comprises a V or U-shaped cut-out region or slot 152 extending through the mounting and alignment structure 100 in the direction of the z-axis. This open-slot configuration allows a fiber, schematically illustrated as F to be installed vertically in the direction of arrow 159 down into the slot 152. In the typical implementation, the fiber F is then bonded to the surface 132 in the bottom of the slot. Solder bonding is preferably used, but other alternatives such as epoxy bonding exist.

In some examples, the depth of the slot relative to the locations of the attachment points of the armatures is designed to resist any rocking in response to z-axis forces exerted on the structure by the fiber. Specifically, some movement in response to z-axis forces is unavoidable. Slot depth is controlled, however, so that the fiber axis does not move in response to these forces.

In alternative examples, the handles 136 are engaged and the U-shaped slot crimped closed by applying force along arrow 157 to secure the optical component, such as fiber.

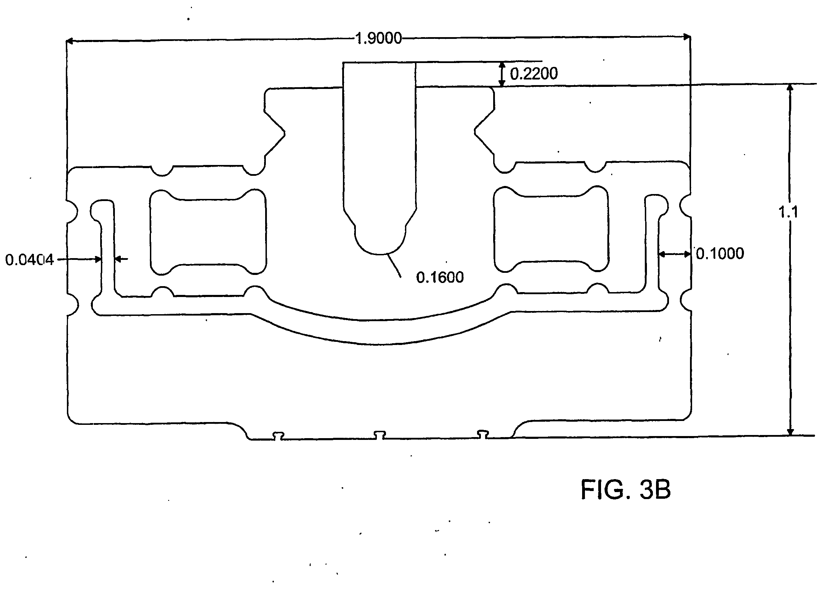

Fig. 3B shows exemplary dimensions of the third example. Specifically, the height h of the illustrated example is 1.1 millimeters (mm). Generally the structures typically have height of greater than 0.5 mm to promote manipulation. To provide adequate clearance in standard packages, the structures are typically less then 2.0 mm in height. The width w of the illustrated structure is 1.9 mm. Here again, the width is preferably greater than 0.5 mm to facilitate stable installation on the bench. To provide acceptable component packing densities and clearance between components the width w of typically less than 4 mm is desirable.

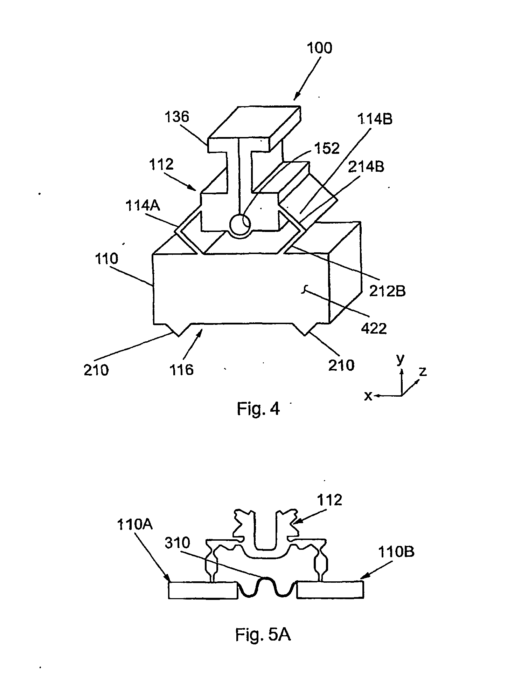

Fig. 4 shows a third example mounting and alignment structure 100 that shares many similarities with the structures described in connection with Figs. 1-3. It has a base 110 and laterally-extending base surface 116. Further, the third illustrated example has-an optical component interface 112 with an optical port 152. In this example, the handle 136 is more pronounced, extending vertically upward from the interface 112.

V-shaped alignment features 210 are provided on the base surface for engaging complementary V-shaped alignment trenches in the bench.

One of the more distinguishing characteristics is the armatures 114A and 114B. Instead of having segments that extend parallel to the x and y axes, each armature comprises two diagonally extending segments 212, 214 that intersect substantially at a right angle with respect to each other. Further, the armatures have no discrete flexure system but instead have a relatively constant cross-section along the length of the armatures.

Further, the optical component interface 112 comprises a relatively closed slot-shaped optical component mounting slot 152. In one embodiment, a fiber is inserted into the slot 152 and then the slot is crimped closed to secure the fiber therein. Further, a handle 136 is provided extending vertically from the optical component interface 112. In the illustrated example, the handle 136 has right and left extensions on either side of the slot 152.

Another distinction relative to the third example of Fig. 4 relative to the previously is the use of a z-axis flexure. Specifically, the base 110 comprises a front plate portion 422 and a rear plate portion (not shown). Thus, the base 110 is a hollow box-configuration. The use of the Z-axis armature allows controlled flexing when stress is exerted in a rotational manner around the x-axis or θ direction.

Fig. 5A shows an example in which the base is divided into two separate base portions 110A, 110B to promote a stable structure-bench interface while simultaneously minimizing the contact area subject to thermal expansion mismatch stresses. In order to make the device more robust during manufacturing of the structure and during its installation on the optical bench, a spring-like connecting element 310 connects the two halves of the base 110A, 110B. This element is clipped prior to installation or intentionally collapsed.

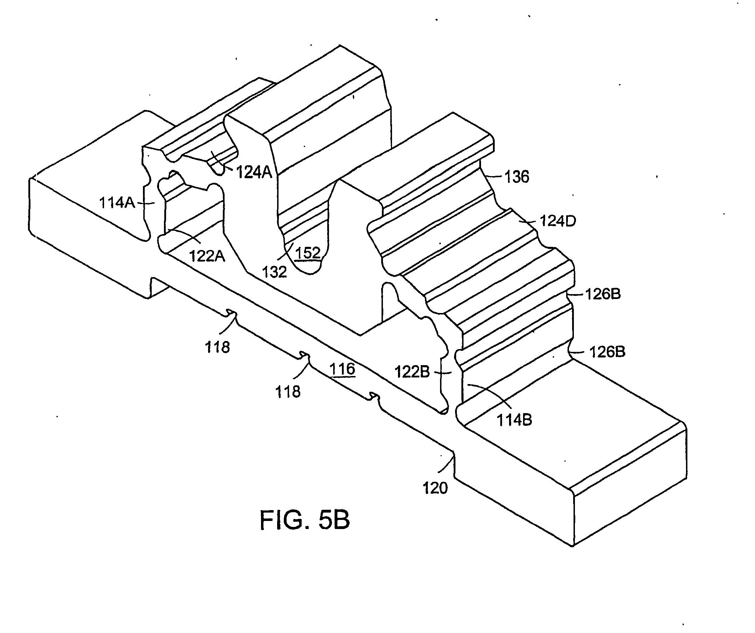

Fig. 5B shows a related example with similar reference numerals indicating similar parts. This example is notable in that the angle between vertically-extending segments 126 and the horizontally-extending segments 124 form an obtuse angle. In some applications this configuration facilitates alignment.

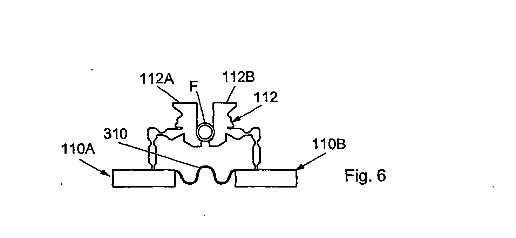

Fig. 6 shows a fifth example, being closely related to the fourth example of Fig. 5. Here, the optical component interface comprises two separate, divided portions 112A, 112B. In this embodiment, an optical component, such as an optical fiber f is inserted into the volumetric region between the two halves 112A, 112B of the interface. The two halves 112A, 112B are snapped closed around the fiber F.

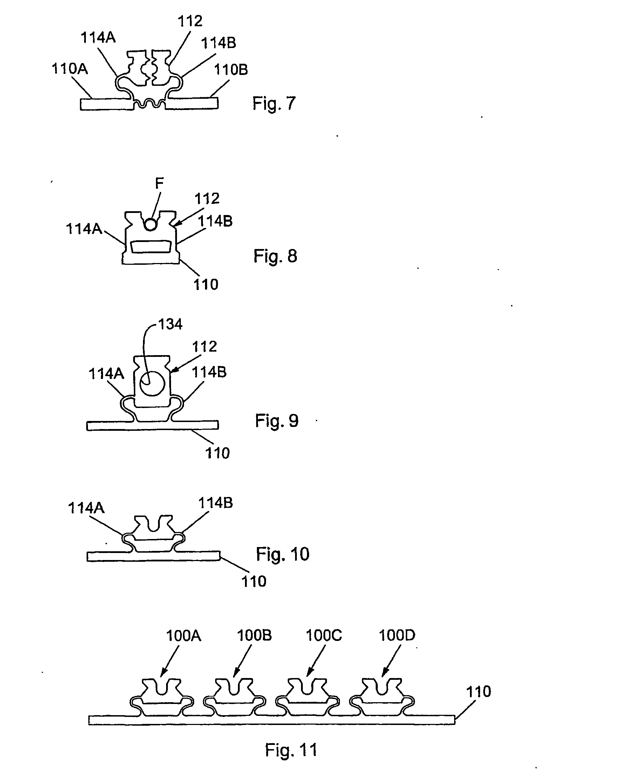

Fig. 7 shows a sixth example of a mounting and alignment structure. This example is notable relative to the previously discussed embodiments in that the armatures 114A, 114B have continuous flexures distributed across the length of the armatures. The flexures are not located at specific flexure points as illustrated in some of the previous embodiments. In this example, the armatures act as distributed flexing components that are subject to plastic deformation.

Fig. 8 shows a seventh example of the mounting and alignment structures. This example is notable in that the armatures 114A, 114B are relatively rigid such that they will resist any flexing or plastic deformation. Specifically, the armatures 114A, 114B have no discrete flexures as discussed relative to Fig. 1 nor do they have a continuous flexure system as illustrated in Fig. 7 as illustrated by the fact that the armatures are relatively thick. As a result, the example of Fig. 8 is typically used mostly for mounting fibers that pass outside of the module or package through a fiber feed-through. The seventh example resists strain to any stress exerted on, for example, a fiber F held in the interface 112.

Typically, the seventh example is used in conjunction with a second mounting and alignment structure. The first mounting and alignment structure is proximate to the end of the fiber and enables alignment of the fiber end in the x, y plane. The seventh example of an alignment structure is used to minimize the stress transmitted through the fiber to the structure used for fiber-end alignment.

Fig. 9 illustrates an eighth example with continuous flexure armatures 114A, 114B and an optical interface 112 that would be appropriate for an optical component other than an optical fiber. Specifically, a mirror or lens is mounted on the optical interface 112 by bonding such as solder or epoxy bonding. The port 134 enables optical access to that component in which an optical signal is reflected by the optical component or passes through the component thus also passing through the port 134.

Fig. 10 shows ninth example where the base 110 is a relatively wide one-piece base.

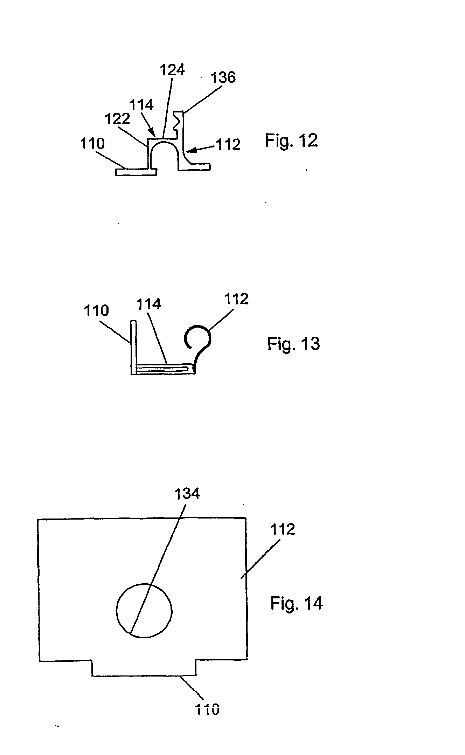

Fig. 11 shows another example in which four structures 100A-100D are integrated on a common base 110. This system is useful for holding optical components, such as optical fibers for four physically parallel optical channels or paths. Each optical fiber is separately aligned with separate alignment characteristics of the structures. The common base, however, enables multiple, simultaneous passive alignment of the structures/fibers in a single pick and placement step.

Fig. 12 shows a non-laterally symmetric mounting and alignment structure. It comprises a base 110 and an armature 114 extending from the base vertically. The armature comprises a vertical segment 122 and a horizontally extending segment 124. The horizontally extending segment 124 terminates in a component interface 112. A handle 136 extends vertically from this interface.

Fig. 13 shows a non-laterally symmetric mounting and alignment structure. In this case, the base 110 extends in a vertical, y-axis direction such that it may be attached onto a side-wall of a module or another mounting and alignment structure. It further has an horizontally extending armature 114 and a component interface 112 adapted to hold a fiber concentrically in the center or abut against a fiber to improve its alignment.

Fig. 14 is a plan view of a mounting structure for exclusively passive mounting of an optical component. Specifically, this example has a base 112 and an integral optical component interface 112. It further has a port 134 for enabling access to the optical component. This example does not have armatures and consequently is only susceptible to small alignment shifts. It is used mostly to hold components when their horizontal or vertical positioning is non-critical, such as, for example, a filter mirror in some system designs.

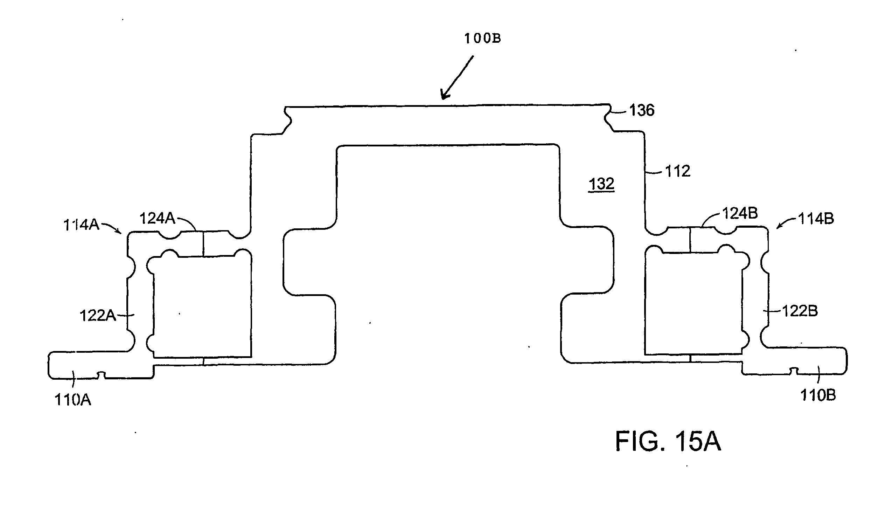

Fig. 15A shows a mounting and alignment structure for mounting relatively large MEMS filter device, a current implementation.

Specifically, this example for a mounting and alignment structure has a divided base 110A, 110B. From each base, respective armatures 114A, 114B extend. The armatures each comprise a vertically extending portion 122A, 122B and a horizontally extending portion 124A, 124B. The optical component interface 112 is relatively large and is designed to hold an optical component mounted to the mounting surface 132, for example. The handle 136 is integral with the interface in this example.

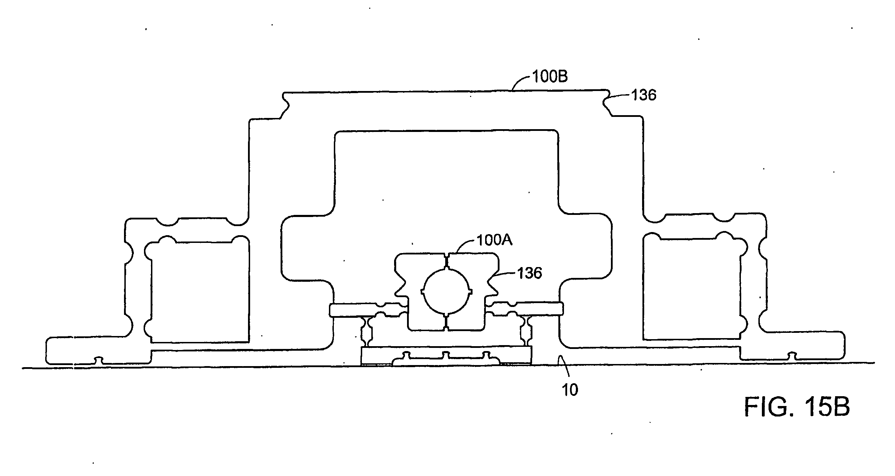

Fig. 15B illustrates the deployment of fourteenth example for an alignment structure 100B with one of the previously discussed alignment structures 100A. In typical installation and alignment, the mounting and alignment structure 100A is first installed on an optical bench 10. Alignment structure is then deformed, in an active alignment process, for example, such that the optical component is properly located relative to the optical path. Subsequently, after the alignment of the optical component held by mounting and alignment structure 100A, the mounting structure 100B is installed with its own optical component. Then, this second alignment structure 100B is then tuned, in an active alignment process, for example, so that the second optical component is properly located in the optical path. The relative size differences between alignment structure 100A and 100B allows series alignments of their respective optical components even though the optical components are mounted in close proximity to each other on the bench 10.

### Mounting structure manufacturing

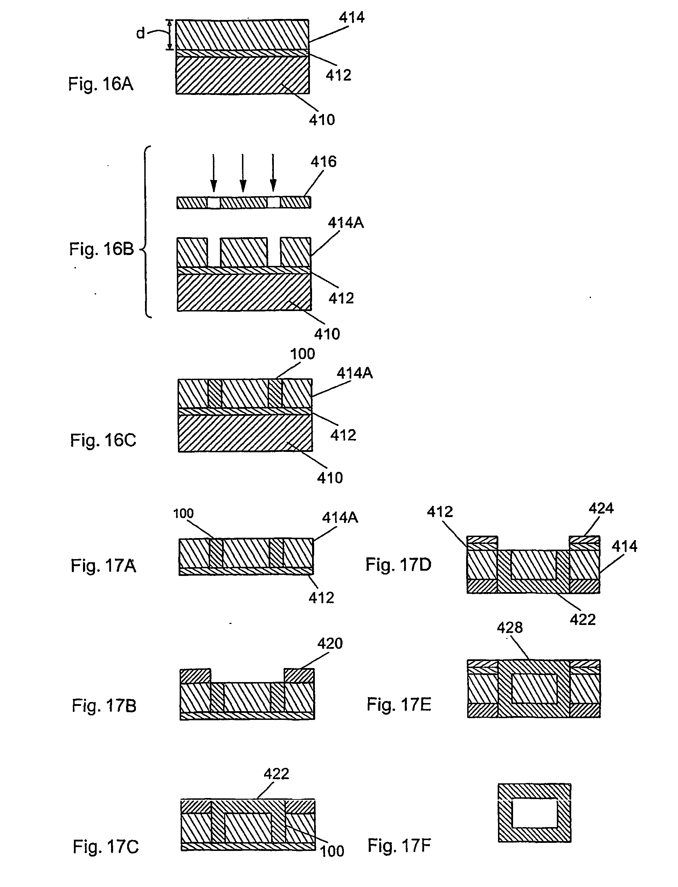

Figs. 16A-16C are cross-sectional views of the mounting and alignment structures 100 during the manufacturing process.

Specifically, as illustrated in Fig. 16A, a thick PMMA resist layer 414 is bonded to a seed/release layer 412 on a substrate 410.

The depth d of the PMMA layer 414 determines the maximum thickness of the subsequently manufactured quasi-extrusion portion of the mounting and alignment structure. As a result, the depth determines the rigidity of the mounting and alignment structure 100 to forces along the Z-axis. The depth and consequently Z-axis thickness of the mounting and alignment structures is in the range of 500-1000 microns. Thicker structures are typically used for strain relief-type structures. According to present processes, the structures, and consequently the depth of the PMMA layer is as deep as 2000 microns to produce structures of same thickness.

Fig. 16B illustrates the next fabrication step in the mounting and alignment structure 100. Specifically, the thick PMMA resist layer is patterned by exposure to collimated x-rays. Specifically, a mask 416, which is either be a positive or negative mask having the desired pattern for the structure, is placed between the x-ray source such as a synchrotron and the PMMA layer 414. The PMMA layer 414 is then developed into the patterned layer 414A as illustrated in Fig. 16B.

Fig. 16C shows the formation of the quasi-extrusion portion of the mounting structure 100. Specifically, the quasi-extrusion portion is formed via electroplating. The plating metal is nickel. Nickel alloys, such as a nickel-iron alloy, are used in alternative examples. Alternatively gold or a gold alloy is used in still other examples. Currently, alternative metal and alloys include: silver, silver alloy, nickel copper, nickel cobalt, gold cobalt and alloys laden with colloidal oxide particles to pin the microstructures.

Figs. 17A-17F illustrate a process of manufacturing the z-axis flexure 422 previously discussed with reference to Fig. 4. Specifically, as illustrated in Fig. 17A, after the formation of the quasi-extruded portion of the mounting and alignment structure, the substrate 410 is removed from the seed layer 412. Thereafter, an additional photoresist 420 layer is coated and then patterned as illustrated in Fig. 17B for one plate of the z-axis flexure. Thereafter, a further electroplating step is performed to fabricate the plate of the z-axis flexure 422 onto the existing cross-sectionally constant section 100.

In Fig. 17D, a second photoresist is formed and then patterned on the reverse side of the structure 100 and first PMMA layer 414. The etching is performed through the seed layer 412. Another plating step is performed and the second plate of the z-axis flexure 428 is manufactured as illustrated in Fig. 17E. Thereafter, as illustrated in Fig. 17F, the remaining photoresist layer 424, seed layer 412, and PMMA layer 414 are removed leaving the hollow box-shaped structure illustrated. This box shaped structure forms the bottom base section 422 of the mounting and alignment structure illustrated in Fig. 4.

### Mounting structure-optical component bench installation

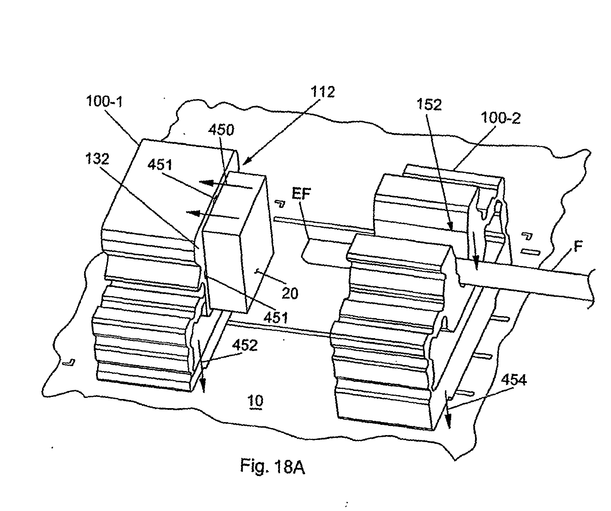

Fig. 18A illustrates the process associated with installing optical components on the optical bench 10.

The bench is constructed from mechanically robust, chemically stable, and temperature stable material, such as silicon, beryllium oxide, aluminum nitride, aluminum silicon carbide, beryllium copper. It is typically metal or ceramic coated with gold or a gold alloy for example.

Specifically, in a step 450, optical component 20 is installed on a first mounting and alignment structure 100-1. Specifically, the optical component 20 is bonded to the mounting and alignment structure 100-1. A solder bonding is used in which solder is first applied to a periphery of the optical component and/or the bonding surface 132 of the optical component interface 112. Then the optical component is brought into contact with the mount surface 132 of the structure's component interface 112. The solder is then melted and allowed to solidify.

Complimentary alignment features in the optical component 20 and the interface 112 facilitate alignment and proper seating between the component 20 and structure 100-1. Specifically, in alignment channels 113 (see Figs. 1 and 2) are formed on the structure's interface. Marks or projections 450 on the optical component 20 engage the slots 113 to ensure reproducible installation of the component 20 on the structure 100-1.

Alternatively, the component 20 is epoxy bonded or bonded using another adhesive bonding technique to the structure.

Then, in a structure-bench mounting step 452, the structure 100-1 is brought into contact with the optical bench 10 and bonded to the bench. Solder bonding is used in which the bench is held in a heated chuck of a pick-and-place machine while the preheated structure is brought into contact with the bench. The heat is then removed to solidify the solder.

As illustrated in connection with alignment structure 100-2, for other optical components, the mounting steps are reversed. In this example, the mounting and alignment structure 100-2 is contacted and bonded to the bench in a structure-bench bonding step 454. Thereafter, the optical fiber is seated in the U-shaped port 152 of the mounting and alignment structure 100-2. Thereafter, the fiber is either bonded to the interface bonding surface 132 or the U-shaped slot is crimped such that the fiber is secured in the bottom of the U-shaped port. Thus, the fiber endface EF is secured to the optical bench in proximity to the optical component, such as thin film filter or mirror 20, held by structure 100-1.

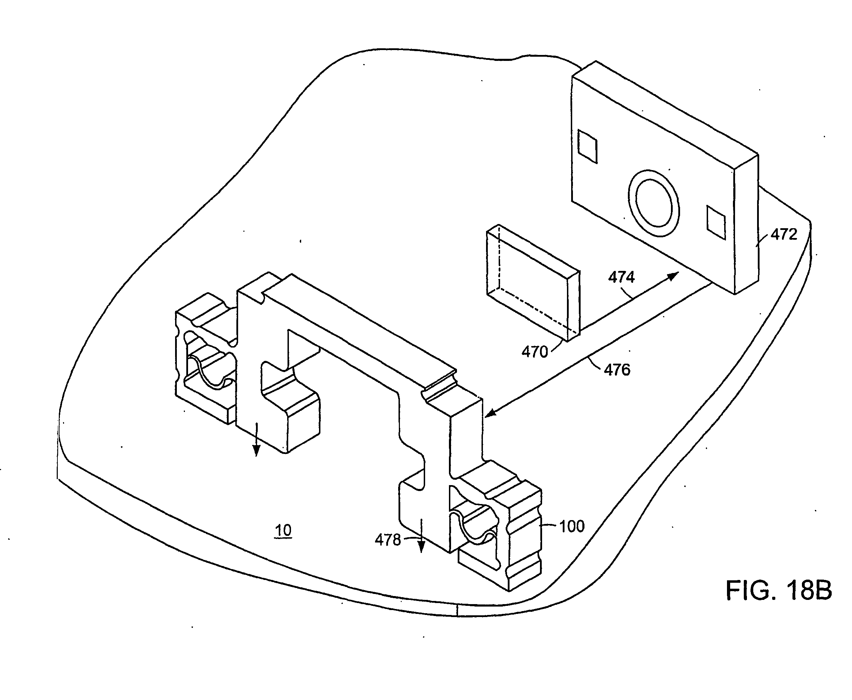

Fig. 18B also illustrates the process associated with installing MEMS-type optical components on the optical bench 10. Specifically, in this embodiment, a front mirror 470 is first bonded over a reflective membrane of the MEMS device 472 in a first bonding step 474. Then, the MEMS device 472 is bonded to the alignment structure 100 in a second bonding step 476. Then in a bench-bonding step 478, the composite MEMS/structure is bonded to the bench 10.

### Mounting structure deformation in alignment

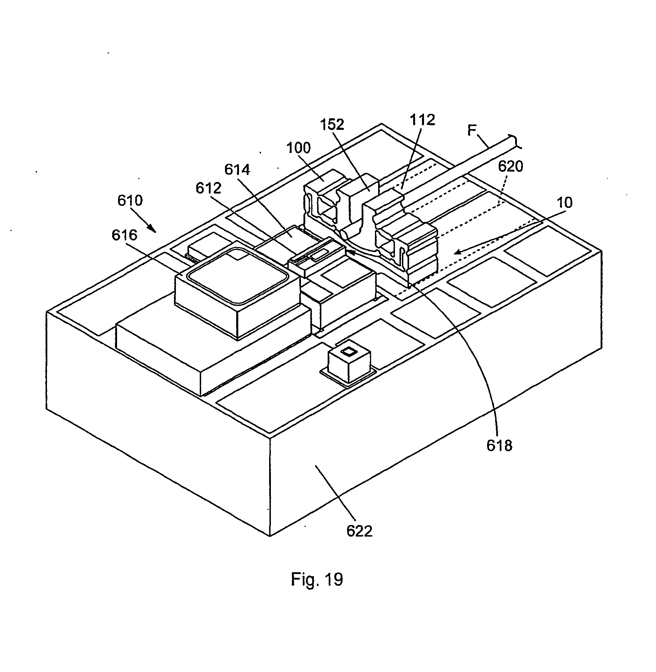

Fig. 19 is a perspective view of a fiber optic laser optical signal source system. Specifically, the laser source system 610 comprises a laser chip 612, which has been mounted on a hybrid substrate 614. Typically, this substrate supports the electrical connections to the chip 612 and possibly also comprises a thermoelectric cooler for maintaining an operating temperature of the chip 612. The hybrid substrate 614 is in turn installed on an optical bench portion 10 of a package substrate 622. A detector 616 is located behind the chip 612 on the bench 10 to detect rear facet light and thereby monitor the operation of the laser 612.

Light emitted from a front facet 618 of the chip 612 is collected by a fiber f for transmission outside the optical system 610. In one implementation, the light propagating in fiber f is used to optically pump a gain fiber, such as a rare-earth doped fiber or regular fiber in a Raman pumping scheme. In other implementations, the laser chip 612 is modulated in response to an information signal such that the fiber transmits an optical information signal to a remote detector. In still other implementations, the laser chip 612 is operated to run in a CW mode with modulation performed by a separate modulator such as a Mach-Zehnder interferometer.

An optical component mounting and alignment structure 100 is installed on the optical bench portion 10 of the package substrate 622. As discussed previously, the optical bench has alignment features 620, which mate with opposite-gender alignment features on the base surface of the mounting and alignment structure 100 as described previously in connection with Fig. 1, for example.

As also discussed previously, the fiber f is installed in the U-shaped port 152, which is part of the optical component interface 112 of the mounting and alignment structure 100.

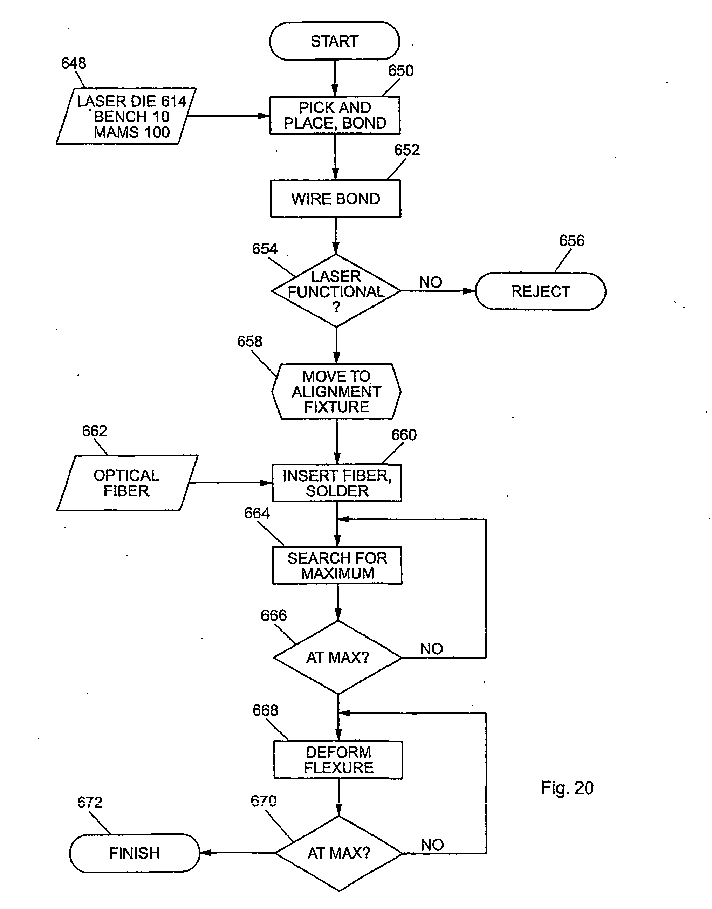

Fig. 20 is a process diagram illustrating the active alignment process that is used in conjunction with the deformable optical component mounting structures in the manufacture of an optical signal source as illustrated in Fig. 19, for example.

Specifically, in step 650, a laser die 614 and alignment structure 100 are mounted to the optical bench 10 in a pick-and-place and bonding process. Specifically, a pick-and-place robot locates the die 614 and the alignment structure 100 on the optical bench 10 using passive alignment. The alignment process is accomplished using machine vision techniques and/or alignment features in the laser bench 10, and mounting and alignment structure 100, and die 614, or explicitly relative to a defined coordinate system of the bench 10/module 622.

In step 652, once the laser hybrid 614 and structure 100 are attached to the bench 10, wire bonding is performed to the laser hybrid. Then, in step 654, the laser 612 is electrically energized to determine whether or not the laser is functioning properly.

If the laser is not functioning, then the optical system is rejected in step 656.

If, however, the laser is determined to be operational in step 654, the bench is moved to an alignment fixture of the production system in step 658.

In step 660, the fiber f is inserted into the U-shaped port 152 of the optical component interface 112 and bonded there. The fiber can be solder bonded to bonding surface 132.

In step 664, the alignment system grasps or engages the mounting and alignment structure 100 to deform the mounting and alignment structure 100 in response to a strength or magnitude of a signal transmitted by the fiber f from the laser 612.

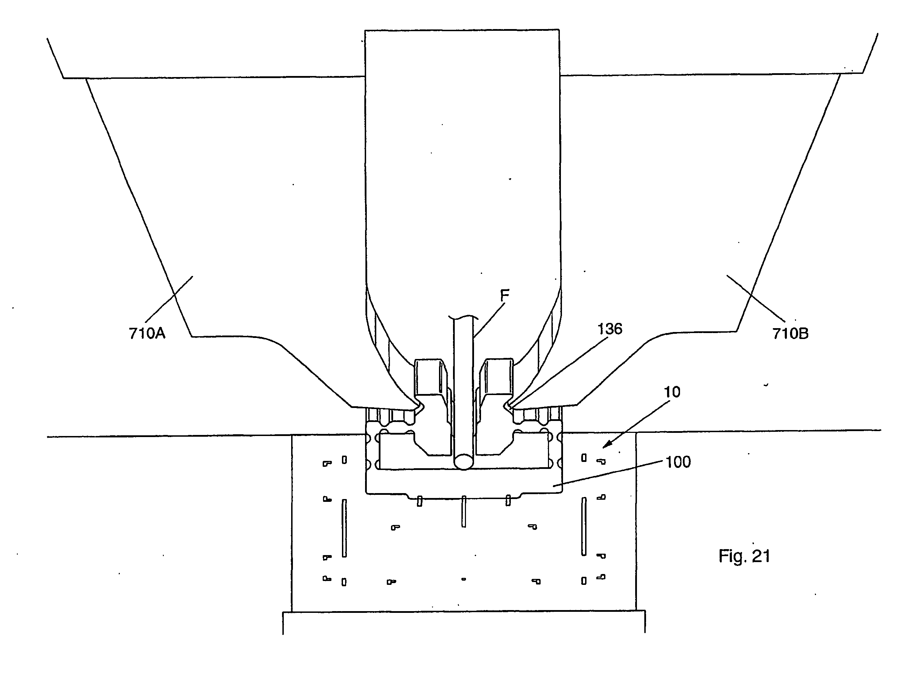

Fig. 21 illustrates the engagement between the alignment system and the mounting and alignment structure 100 to align the fiber f. Specifically, the two jaws 710A, 710B engage the handles 136 of the mounting and alignment structure 100 and then move the mounting and alignment structure to displace the fiber f in an x-y plane, which is orthogonal to the axis of the fiber f. Simultaneously, the magnitude of the signal transmitted by the fiber is monitored until a maximum signal is detected in step 666 of Fig. 20. Of note is the fact that the right and left cut-outs of the handle 136 enable the jaws of alignment system to both pull and push the structure away and toward the bench 10, as needed to achieve an optimal alignment.

Returning to Fig. 20, once the maximum signal is detected in step 666, the alignment system further deforms the mounting and alignment structure 100 such that when the mounting and alignment structure is released, it will elastically snap-back to the desired alignment position detected in step 666. In other words, the mounting and alignment structure is plastically deformed such that it will have proper alignment when the jaws 710A, 710B of the alignment system disengage from the mounting and alignment structure 100.

If it is subsequently determined in step 670 that the optical component, *i*.*e*., the fiber is not at the position associated with the maximum coupling, the deformation step 668 is performed again until the position is within an acceptable tolerance.

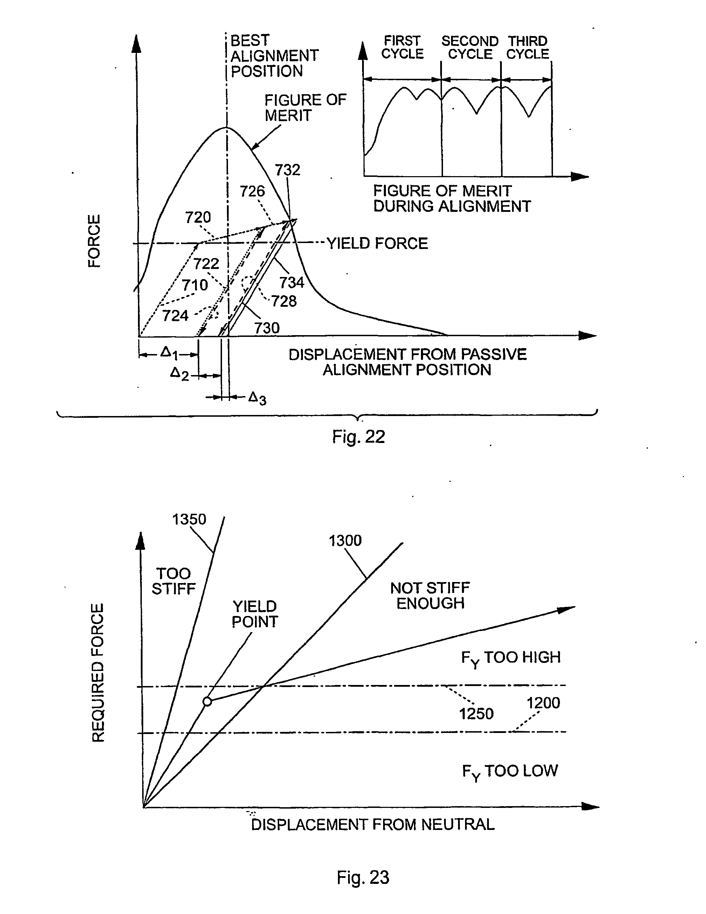

Fig. 22 is a plot illustrating the alignment process. Specifically, the figure of merit or the coupling efficiency of light into the optical fiber is plotted as a function of displacement of the optical fiber. Specifically, the coupling efficiency is maximized when the fiber is located at the best alignment position and falls off on either side of this position.

Fig. 22 also illustrates force or stress as a function of strain or displacement during the several steps of the alignment process. Specifically, in a first step 710, force is exerted on the mounting and alignment structure, such that it undergoes elastic deformation. In this regime, there is a substantially linear relationship between the applied force, on the y-axis and the displacement or strain on the x-axis. Once the yield force level is exceeded, however, the mounting and alignment structure 100 undergoes plastic deformation as illustrated by line 720. This plastic deformation results in permanent deformation to the mounting and alignment structure.

When force is removed, the mounting and alignment structure undergoes elastic "snap-back" as illustrated by step 722. That is, with the force removed, the structure undergoes some elastic movement. However, because the yield force level was exceeded, the mounting and alignment structure has been permanently deformed as indicated by distance Δ₁.

Even with this plastic deformation, the fiber is still not at the best alignment position. As a result, another cycle of plastic deformation is performed. Specifically, force is applied such that the mounting alignment structure undergoes elastic deformation as illustrated by line 724. Once the new yield force level has been exceeded a second time, it then undergoes plastic deformation as indicated by line 726. The yield force has increased during this second alignment cycle due to work hardening. Force is then removed and the mounting and alignment structure undergoes elastic snap-back as illustrated by line 728.

This second plastic deformation step, since it exceeded the yield force, resulted in movement toward the best alignment position of Δ₂.

Nonetheless, if optimal alignment is to be achieved, more plastic deformation must be performed. Specifically, again the elastic deformation is performed in step 730 until the yield force is reached. Then, a small amount of plastic deformation is performed as indicated by line 732. Force is removed and the mounting alignment structure now snaps back to the best alignment position as indicated by line 734.

The graph insert shows the figure of merit during the alignment process. During the first plastic deformation cycle, the position passes through the best alignment position, but after force is removed, the elastic snap-back pulls it out of best alignment. During the second deformation cycle, the best alignment position is again passed and exceeded. This second cycle, however, improves the alignment once force is removed. Finally, the third cycle brings the fiber into the best alignment position.

### Mounting structure design criteria

Fig. 23 presents a plot of force, F_{Y}, as a function of displacement that can be employed in accordance with the invention to design the armatures for a given application. The yield force is the force at which the structure begins to undergo plastic deformation from an elastic deformation regime.

The lower bound on F_{Y} (1200) is constrained by environmental shock, *i*.*e*., acceleration, and by the possible forces to which the mounting structure might be subjected during handling. Some specifications require optical systems to withstand 5000 g shock-tests. Typically with some optical elements, yield forces of greater than 0.5 Newtons are typically required. This number, however, can be reduced as the size and thus mass of optical elements is reduced. Were there no minimum yield force constraint, the unavoidable forces produced during handling, including fabrication, heat treatment, plating, pick and place, alignment, packaging, and other processes, could cause plastic deformations of the flexure joints. More seriously, any shock to an aligned system might misalign it.

The upper bound on F_{Y} (1250) is constrained by three factors. First, the force required to cause plastic deformation of an armature or flexure must not be so high as to weaken or destroy the bond between the mounting structure and the substrate. Second, the yield force must not be so high as to cause significant elastic deformation in the micromanipulator that is applying the force. Third, the force required to deform the armature or flexure must not be so high as to damage other portions of the integrally-formed mounting structure.

In addition to constraining the armature yield force, it also preferred to constrain how much displacement is required in order to reach the yield point. The lower bound (line 1300) is dictated first by the physical range of the structure. A mounting structure only functions as desired if there is enough plastic deformation range to reach the aligned position. Generally, the alignment structures need to enable movement or placement of the optical component of 0 to 50 microns. The typically alignment algorithms require plastic deformation that yields 4 to 5 microns of movement in the position of the optical component to reach alignment. The second constraint on the minimum stiffness is determined by the amount of "overshoot" deemed acceptable by the alignment algorithm. If the structures are too elastic, then they must be pressed a long distance beyond the desired alignment point in order to make even a small alignment adjustment.

The final constraint is the maximum stiffness of the flexures (line 1350). Were work hardening not an issue, there would be no constraint on maximum stiffness (except, of course, material limitations). With nickel and nickel alloys, however, work hardening occurs. Therefore, the stiffness upper bound is selected so that line 1250 is not exceeded even with work hardened created by successive plastic deformation cycles performed during the search for the correct alignment.

F_{Y,*y*}, *i*.*e*., the yield force in the direction of the y-axis, is less than 3 Newtons (N), typically between 0.2 and 1 N. The yield force along the x-axis, F_{Y,x} is similarly limited to less than about 3 Newtons, typically between 0.2 and 1 N. Yield forces below 0.2 N are viable if smaller optical component are used, however. These lower limits are related to the mass of the optical component that the structure must restrain without unintended plastic deformation. Thus, lower yield forces are possible with smaller components in subsequent product generations.

In contrast, the yield force the z-axis direction, *i*.*e*., F_{Y,z} or F_{Y,θ}, is much larger to promote alignment in only the x-y plane. F_{y,z} or F_{y,θ} are greater than 5 N or 10 N. Further, especially in versions of the alignment structures that are used to secure fiber pigtails to benches. Thermal expansion mismatches resulting stresses on the fibers. The objective is to design the structures so that such stresses result in as little movement in the fiber endface as possible. Especially any rocking motion is desirably avoided by balancing the structures by selecting the location of where the armatures attach to the fiber component interface.

### Further embodiments

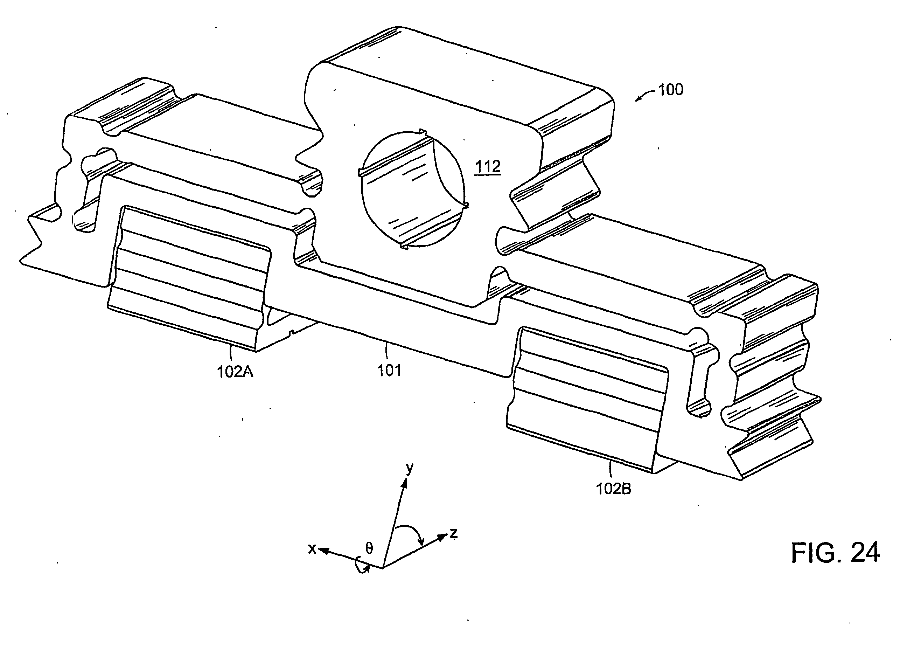

Fig. 24 illustrates another example in which the structure 100 is a composite of an extrusion-like portion 101, which has a constant cross section along the z-axis, and two z-axis flexure pieces 102, which control rotation around the x-axis or in the direction of angle Θₓ, thereby determining the resistance to force components along the z-axis. On the z-axis flexure pieces 101 are separately fabricated and bonded to base surface of portion 101. Base surfaces of the pieces are then bonded to the bench.

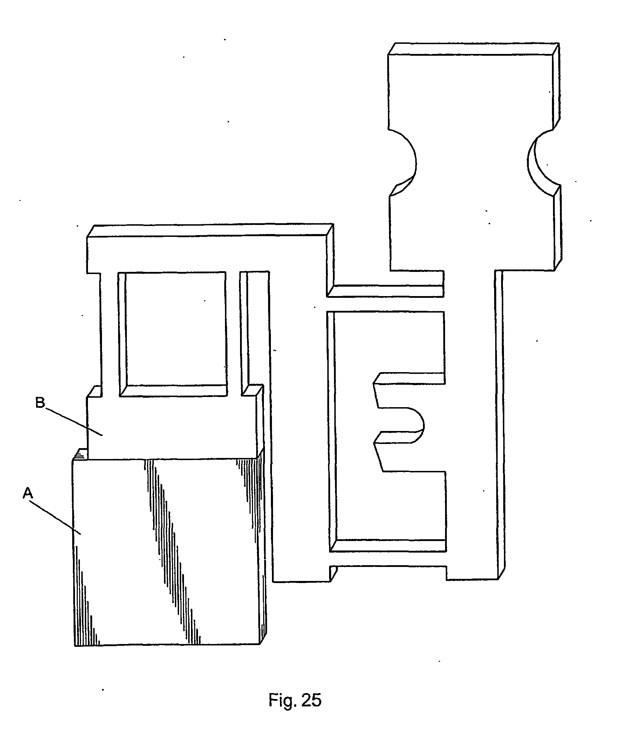

Fig. 25 is an example mounting structure wherein two different materials (indicated as "A" and "B") are employed in the mounting structure for minimizing any change in optical axis location due to thermal expansion and/or contraction of the structure. In one example configuration, the "A" material is selected, in combination with the design of that region of the structure, to expand upward due to temperature change, while the "B" material and its corresponding mounting design features are selected for a tendency to expand downward due to temperature change. These opposing expansion tendencies result in a compensating action that produces stability in structure geometry and position across a range of operational temperatures.

### Optical system production line

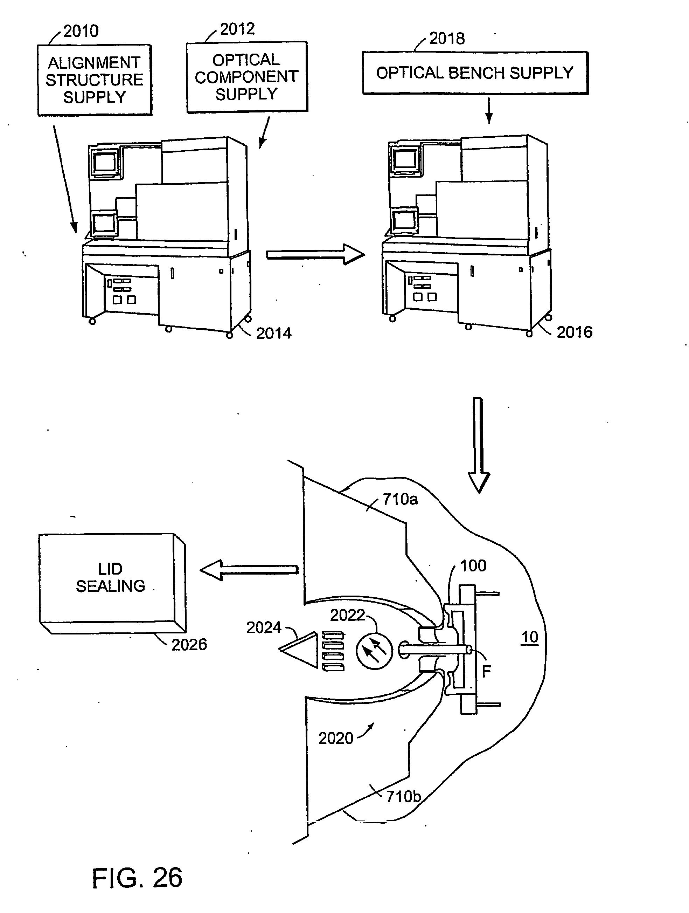

Fig. 26 schematically illustrates the manufacturing sequence for optical systems. Generally, process comprises precision pick and place to locate the optical component to an accuracy of better than 10 microns, better than two microns in the preferred embodiment, followed by active alignment in which the position of the component is trimmed to an accuracy of about a micron, preferably better than a micron.

Specifically, an alignment structure supply 2010, such as a gel pack or other machine-vision compatible holder, is provided along with a similarly configured optical component supply 2012.

Each of the supplies is accessed by a pick-and-place machine 2014. Specifically, the pick-and-place machine applies the optical components to the alignment structures and bonds the components. Typically, either the alignment structures and/or the optical components are solder coated or solder performs are used. The pick-and-place machine heats the alignment structure and the optical components and brings the two pieces into contact with each other and then melts and resolidifies the solder.

In the current example the pick-and-place machine is manufactured by Karl Süss, France, type FC-150 or FC-250. These pick-and-place machines have a vacuum chuck for picking-up the optical components and a holder for holding the alignment structures.

The alignment structures, with the affixed optical components are then fed to a separate or the same pick-and-place machine, which has access to an optical bench supply 2018. In this second pick-and-place operation, the pick-and-place machine 2016 holds the optical bench on a vacuum chuck or holder and then applies the alignment structure, with the optical component, to the optical bench using its vacuum chuck. The bench and structure are then heated to effect the solder bonding. Further, by matching alignment features of the benches and alignment features of the mounting structures, placement accuracies of less than 5 microns are attainable. The structures are located on the bench with accuracies of better than 2-3 microns in a production environment.

The optical benches, with the alignment structures affixed thereto are then fed to an alignment system. This alignment system 2020 has the jaws 710A, 710B which grasp the handle of the alignment structure 100 to effect alignment. This alignment is active alignment in which the magnitude of the optical signal 2022 is detected by a detector 2024. The alignment structure 100 is manipulated and deformed until the optical signal 2022, detected by the detector 2024, is maximized. Alignment search strategies such are a hill-climbing approach or spiral scan approach can be utilized.

In other situations, such as when installing optical fibers on the bench 10, the alignment structure is installed first without the fiber attached by the pick and place machine 2016. Then at the alignment system, the fiber is fed through a fiber feed-through in the module and attached, such as by solder bonding, to the alignment structure 100. Then the alignment system manipulates the structure to effect alignment.

Once aligned, the optical bench and module is then passed to a lid sealing operation 2026 where the final manufacturing steps are performed such as lid sealing and baking, if required.

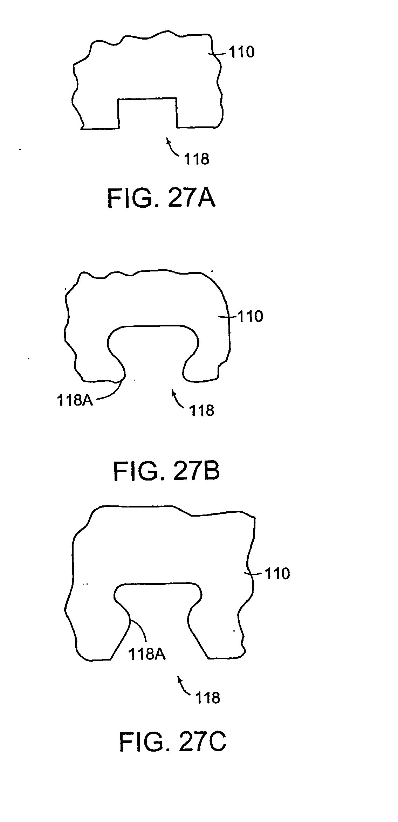

Figs. 27A, 27B, and 27C illustrate three different configurations for the alignment channels 118 introduced in Fig. 1.

Fig. 27A is the simplest design, but has a drawback associated with implementation in machine vision applications when the base surface is pre-coated with solder, or other bonding agent. Solder fills in the creases and smoothens the channel's edges making alignment based on the features potentially less accurate.

Figs. 27B and 27C show channels incorporating cavities in the features that facilitate the identification of edges 118A even after solder coating. The resulting clear edge features, even after coating, facilitate alignment during bench installation.

While this invention has been particularly shown and described with references to preferred embodiments thereof, it will be understood by those skilled in the art that various changes in form and details may be made therein without departing from the scope of the invention encompassed by the appended claims.

## Claims

1. An optical system production line, comprising
an optical bench supply (2018) that provides optical benches (10);
a component supply (2012) that provides optical components (20);
a pick-and-place machine (2016) that receives optical benches (10) from the bench supply (2018), picks optical components (20) from the optical component supply (2012), and places the optical components (20) on the optical benches (10) to which the optical components are secured and which pick-and-place machine is also able to secure the optical components on the optical bench, and a separate
optical system aligner (2020) to which the then secured optical components on the optical benches are transferred, the optical system aligner charactering the positions of the secured optical components (20) on the optical bench (10) and mechanically adjusting the relative positions of the then still secured optical components (20) by plastic deformation.

2. An optical system production line as claimed in claim 1, wherein the pick-and-place machine (2016) secures the optical components (20) to the bench (10) by solder bonding.

3. An optical system production line as claimed in any of claims 1 or 2, wherein the optical system aligner characterizes the positions of the optical components (20) by activating an optical link of the optical system, detecting an optical signal after interaction with at least some of the optical components, and adjusting the optical components to optimize transmission of the optical signal over the link.

4. An optical system production line as claimed in any of claims 1 through 3, wherein the optical system aligner energizes an active component (612) of the optical system and adjusts the optical components (20) to optimize optical signal transmission through the system from the active optical component (612).

5. An optical system production line as claimed in any of claims 1 through 4, wherein the optical system aligner energizes an active component (612) of the optical system and adjusts positions of at least one passive optical component (20) to optimize optical signal transmission from the active component to the at least one passive component.

6. An optical system production line as claimed in any of claims 1 through 5, wherein the optical system aligner energizes an active component of the optical system and adjusts positions of at least two passive optical components to optimize optical signal transmission between the passive components.

7. An optical system production line as claimed in any of claims 1 through 6, wherein the pick and place machine is a flip-chip bonder.

8. An optical system production line as claimed in any of claims 1 through 7, wherein the optical system aligner (2020) comprises two jaws for engaging a mounting structure supporting the optical component and moving the structure relative to the bench.

9. An optical system production line as claimed in any of claims 1 through 8, further comprising:
an alignment structure supply (2010) that provides alignment structures (100);
a pick-and-place machine (2014) that bonds the optical components (20) to the alignment structures (100), which structures are then bonded to the optical bench (10) to thereby secure the optical component (20) to the bench (10).

## Patentansprüche

1. Optiksystem-Fertigungslinie, umfassend
eine Zuführung (2018) für optische Bänke, die optische Bänke (10) bereitstellt;
eine Komponentenzuführung (2012), die optische Komponenten (20) bereitstellt;
eine Bestückungsmaschine (2016), die optische Bänke (10) von der Zuführung (2018) für optische Bänke empfängt, optische Komponenten (20) von der Komponentenzuführung (2012) aufnimmt und welche die optischen Komponenten (20) an den optischen Bänken (10) anordnet, an welchen die optischen Komponenten befestigt werden, und welche Bestückungsmaschine (2016) auch in der Lage ist, die optischen Komponenten an der optischen Bank zu befestigen; und
einen davon getrennten Optiksystemausrichter (2020), an den die dann befestigten optischen Komponenten an den optischen Bänken übergeben werden, wobei der Optiksystemausrichter (2020) die Positionen der befestigten optischen Komponenten (20) an der optischen Bank (10) kennzeichnet und mechanisch die relativen Positionen der dann immer noch befestigten optischen Komponenten (20) durch plastische Verformung anpasst.

2. Optiksystem-Fertigungslinie nach Anspruch 1, wobei die Bestückungsmaschine (2016) die optischen Komponenten (20) an der Bank durch Lötverbinden befestigt.

3. Optiksystem-Fertigungslinie nach einem der Ansprüche 1 oder 2, wobei der Optiksystemausrichter die Positionen der optischen Komponenten (20) **kennzeichnet durch**: Aktivieren einer optischen Verbindung des optischen Systems, Erfassen eines optischen Signals nach Wechselwirkung mit mindestens einigen der optischen Komponenten und Justieren der optischen Komponenten, um die Übertragung des optischen Signals über die Verbindung zu optimieren.

4. Optiksystem-Fertigungslinie nach einem der Ansprüche 1 bis 3, wobei der Optiksystemausrichter eine aktive Komponente (612) des optischen Systems anschaltet und die optischen Komponenten (20) justiert, um die optische Signalübertragung durch das System von der aktiven optischen Komponente (612) zu optimieren.

5. Optiksystem-Fertigungslinie nach einem der Ansprüche 1 bis 4, wobei der Optiksystemausrichter eine aktive Komponente (612) des optischen Systems anschaltet und die Positionen mindestens einer passiven optischen Komponente (20) justiert, um die optische Signalübertragung von der aktiven optischen Komponente (612) zur mindestens einen passiven Komponente zu optimieren.

6. Optiksystem-Fertigungslinie nach einem der Ansprüche 1 bis 5, wobei der Optiksystemausrichter eine aktive Komponente des optischen Systems anschaltet und die Positionen mindestens zweier passiver optischer Komponenten (20) justiert, um die optische Signalübertragung zwischen den passiven Komponenten zu optimieren.

7. Optiksystem-Fertigungslinie nach einem der Ansprüche 1 bis 6, wobei die Bestückungsmaschine ein Flip-Chip-Verbinder ist.

8. Optiksystem-Fertigungslinie nach einem der Ansprüche 1 bis 7, wobei der Ausrichter (2020) für optische Systeme zwei Backen umfasst, um sich in Eingriff mit einem Montageträger zu bringen, der die optische Komponente hält, und um die Struktur relativ zur Bank zu Bewegen.

9. Optiksystem-Fertigungslinie nach einem der Ansprüche 1 bis 8, weiterhin umfassend:
eine Ausrichtungsstrukturzuführung (2010), das Ausrichtungsstrukturen (100) bereitstellt;
eine Bestückungsmaschine (2014), welche die optischen Komponenten (20) mit den Ausrichtungsstrukturen (100) verbindet, welche Strukturen dann mit der optischen Bank (10) verbunden werden, um **dadurch** die optische Komponente (20) an der Bank (10) zu befestigen.

## Revendications

1. Ligne de production pour systèmes optiques, comprenant :
une alimentation de bancs optiques (2018) qui fournit des bancs optiques (10) ;
une alimentation de composants (2012) qui fournit des composants optiques (20) ;
une machine de mise en place (2016) qui reçoit des bancs optiques (10) depuis l'alimentation de bancs (2018), qui saisit des composants optiques (20) depuis l'alimentation de composants optiques (2012), et qui place les composants optiques (20) sur les bancs optiques (10) sur lesquels les composants optiques sont fixés, et ladite machine de mise en place étant également capable d'attacher des composants optiques sur le banc optique ; et
un dispositif d'alignement séparé pour système optique (2020), auquel sont transférés les composants optiques alors fixés sur les bancs optiques, ledit dispositif d'alignement pour systèmes optiques caractérisant les positions des composants optiques fixés (20) sur le banc optique (10) et ajustant mécaniquement les positions relatives des composants optiques alors que ceux-ci sont encore fixés, par déformation plastique.

2. Ligne de production pour systèmes optiques selon la revendication 1, dans laquelle la machine de mise en place (2016) fixe les composants optiques (20) sur le banc (10) par brasage.

3. Ligne de production pour systèmes optiques selon l'une ou l'autre des revendications 1 et 2, dans laquelle le dispositif d'alignement pour système optique caractérise les positions des composants optiques (20) en activant un lien optique du système optique, en détectant un signal optique après interaction avec au moins certains des composants optiques, et en ajustant les composants optiques pour optimiser la transmission du signal optique via le lien.

4. Ligne de production pour systèmes optiques selon l'une quelconque des revendications 1 à 3, dans laquelle le dispositif d'alignement pour système optique excite un composant actif (612) du système optique et ajuste les composants optiques (20) pour optimiser la transmission d'un signal optique à travers le système depuis le composant optique actif (612).

5. Ligne de production pour systèmes optiques selon l'une quelconque des revendications 1 à 4, dans laquelle le dispositif d'alignement pour système optique excite un composant actif (612) du système optique et ajuste les positions d'au moins un composant optique passif (20) pour optimiser la transmission d'un signal optique depuis le composant actif vers ledit au moins un composant passif.

6. Ligne de production pour systèmes optiques selon l'une quelconque des revendications 1 à 5, dans laquelle le dispositif d'alignement pour système optique excite un composant actif du système optique et ajuste les positions d'au moins deux composants optiques passifs pour optimiser la transmission d'un signal optique entre les composants passifs.

7. Ligne de production pour systèmes optiques selon l'une quelconque des revendications 1 à 6, dans laquelle la machine de mise en place est une machine du type "flip-chip".

8. Ligne de production pour systèmes optiques selon l'une quelconque des revendications 1 à 7, dans laquelle le dispositif d'alignement pour système optique (2020) comprend deux mâchoires pour engager une structure de montage qui supporte le composant optique et pour déplacer la structure par rapport au banc.

9. Ligne de production pour systèmes optiques selon l'une quelconque des revendications 1 à 8, comprenant en outre :
une alimentation pour structures d'alignement (2010) qui fournit des structures d'alignement (100) ;
une machine de mise en place (2014) qui colle les composants optiques (20) sur les structures d'alignement (100), lesquelles structures sont alors collées sur le banc optique (10) pour fixer ainsi le composant optique (20) sur le banc (10).
